**Europäisches Patentamt**

**European Patent Office**

**Office européen des brevets**

(11) Publication number : **0 519 810 B1**

# EUROPEAN PATENT SPECIFICATION

(45) Date of publication of patent specification :
**12.07.95 Bulletin 95/28**

(51) Int. Cl.⁶ : **G01V 1/00**

(21) Application number : **92401679.3**

(22) Date of filing : **17.06.92**

(54) Method of geophysical prospection.

(30) Priority : **18.06.91 FR 9107455**

(43) Date of publication of application :
**23.12.92 Bulletin 92/52**

(45) Publication of the grant of the patent :
**12.07.95 Bulletin 95/28**

(84) Designated Contracting States :
**DE DK GB IT NL**

(56) References cited :
**EP-A- 0 419 245
US-A- 3 307 648
US-A- 4 607 353
IEEE TRANSACTIONS ON INFORMATION
THEORY vol. IT-18, no. 5, September 1972,
pages 644-652; C.C. Tseng et al:
"Complementary sets of sequences"**

(73) Proprietor : **SCHLUMBERGER LIMITED
277 Park Avenue
New York, N.Y. 10172 (US)**
(84) **GB**

(73) Proprietor : **SCHLUMBERGER TECHNOLOGY
B.V.
Carnegielaan 12
NL-2517 KM Den Haag (NL)**
(84) **DE DK IT**
Proprietor : **SCHLUMBERGER HOLDINGS
LIMITED
P.O. Box 71,
Craigmuir Chambers
Road Town, Tortola (VG)**
(84) **NL**

(72) Inventor : **Froelich, Benoît
26bis, chemin du Gaillon
F-78160 Marly le Roi (FR)**
Inventor : **Kimball, Christopher
21 Picketts Ridge Road
West Redding, Connecticut 06896 (US)**
Inventor : **Chang, Chung
82 Lawson Lane
Ridgefield, Connecticut 0877 (US)**

(74) Representative : **Hagel, Francis et al
ETUDES ET PRODUCTIONS SCHLUMBERGER
Service Brevets
B.P. 202
F-92142 Clamart Cédex (FR)**

## Description

The invention relates to a geophysical prospecting method applicable particularly to seismic prospecting, and to acoustic prospecting in the form of well logging measurements. In seismic prospecting, the invention is particularly applicable to cross-well seismic surveying.

When energy is released into the subsurface from a seismic source or an acoustic source, a large portion of the energy encounters various geological strata or formations and undergoes attenuation therein prior to being detected by a set of receivers.

Detection by one or more receivers makes it possible, after performing multiple measurements and processing, to obtain an image of the subsurface structure.

The signal y(t) detected by a receiver may be taken to be the response of the subsurface that the pulse p(t) has passed through after being generated by a source.

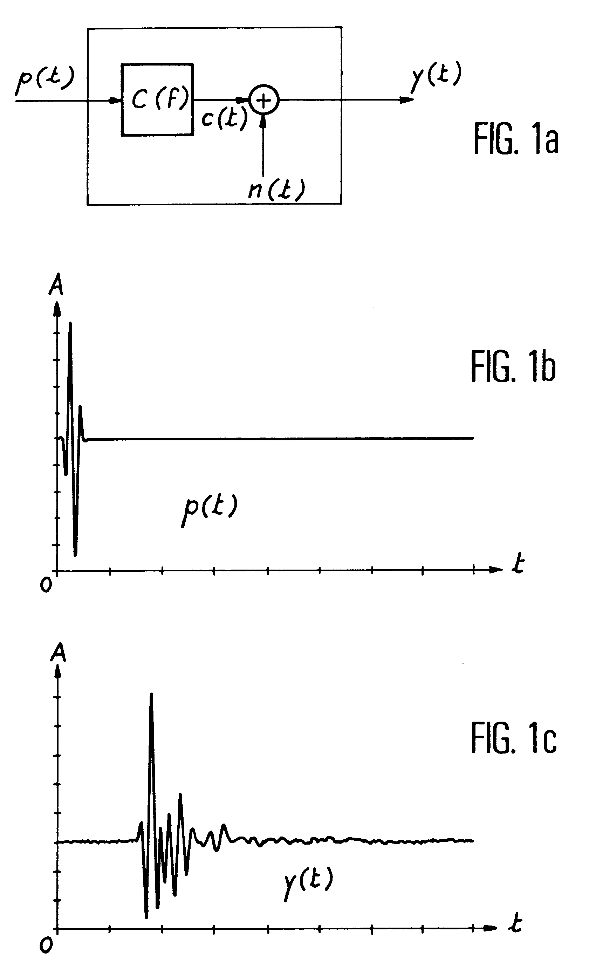

More precisely, this response y(t) corresponds to the response c(t) of the subsurface plus added noise n(t), as shown diagrammatically in Figure 1a.

To illustrate this phenomenon, Figures 1b and 1c which are figures that have been obtained experimentally show the following: Figure 1b, the generation of a single pulse p(t); and Figure 1c, the detected signal y(t).

The greater the quantity of energy supplied by the pulse as generated, the higher the signal-to-noise ratio.

That is why it is generally desirable to provide as much energy as possible for each measurement, which is generally done either by emitting pulses of short duration but high intensity, or else by emitting a series of pulses of lower intensity but over a relatively long period of time.

The emission of high intensity pulses is not suitable in all applications. In particular, it is not suitable for downhole seismic surveys, and in particular for cross-well seismic surveys.

In both of these cases, the seismic sources are received inside a well. It is not possible to use sources capable of delivering sufficient energy without running the risk of damaging the wells. The same problem arises in acoustic prospecting.

It is then preferable to emit series of pulses from transducers which unfortunately have limited peak powers. Indeed, when these limits are exceeded, the transducers are damaged or even destroyed.

In any event, the power transmitted via the cables connecting the energy storage means in the wells to external equipment is also limited.

On reception, processing is performed which consists in summing the response signals for a given series of pulses so as to obtain a single response signal.

This method is known as "stacking" and consists in taking the average of a number of signals.

Unfortunately, using this averaging method considerably increases acquisition time, and this increase in time may be unacceptable for downhole seismic surveys and in particular for cross-well surveys.

Emitting a series of pulses makes it possible to increase the received signal level when sources of limited peak power are used since the energy is then taken from N emitted pulses that are separated by regular time intervals. The time interval Tm cannot be less than the total duration of the response of the subsurface c(t) to avoid mixing up successive responses in time. The total acquisition time thus becomes equal to NTm.

An attempt has been made to solve this problem when performing logging measurements by using pulses that are encoded. Reference may be made, for example to U.S. patent 4 326 129.

That patent teaches using encoded pulses for logging measurements in order to reduce acquisition times that are too long when using the signal-averaging technique.

That document describes using an energy source associated with control means to obtain pseudo-random sequences of energy pulses.

These sequences are injected into the subsurface from the well and receiver(s) located in the well detect thee after they have been reflected on the various underground formations encountered.

The processing performed on the detected signal then consists in correlating the detected signal with the emitted signal. The processing thus consists in performing correlation by means of a correlator.

The subsurface response signal obtained by the correlation operation (between the emitted signal and the detected signal) has secondary lobes. Consequently, this processing gives rise to a poor signal-to-noise ratio.

When the technique described in that patent is applied to cross-well surveying, the signal-to-noise ratio becomes even more critical.

U.S. patent 4 969 129 discloses improving the signal-to-noise ratio by exciting a source by means of m-sequence type encoded pulses. This solution has the advantage of not generating secondary lobes.

m-sequences are periodic sequences in which the period is chosen in such a manner as to be greater than the subsurface response time.

A first drawback of this solution lies in that it is necessary to record the signals during at least one period, and consequently large memory space is required, since period duration is of the order of one second.

A second drawback of the method is that it is necessary for the emitter and for the receiver to be synchronized during at least two periods. This means that very accurate clocks must be used. For a one-second period, the accuracy covers two seconds.

An object of the present invention is to obviate these problems.

The method of the invention makes it possible to obtain a good signal-to-noise ratio. The response signal of the underground formations does not have secondary lobes. Memory space requirements and clock accuracy requirements are not increased.

The present invention also makes it possible to obtain response signals that do not have secondary lobes due to simultaneous emission by a plurality of sources, with a single receiver or a single set of receivers being provided to detect the signals.

More particularly, the present invention provides a geophysical prospecting method comprising the following steps:

injecting an energy signal in the form of at least two pseudo-random pulse sequences of the complementary sequence type into the subsurface;

detecting the energy signal after it has traveled through underground formations; and

performing a set of correlations between the detected signals and a reference signal comprising at least two pseudo-random binary sequences, and summing the correlations in such a manner that the resultant signal which corresponds to the subsurface response signal does not have secondary lobes.

According to another feature of the invention, the injected signal comprises an even number of complementary sequences, the reference signal comprising the same number of pseudo-random sequences so that the response signal obtained in a given time window by summing the correlations has a maximum in the center of the window and zeros throughout the remainder of the window.

According to another feature of the invention, the injected signal comprises two sequences, the sequences in this pair being Golay sequences, the reference signal comprising two binary sequences corresponding to the Golay sequences.

According to the invention, the injected signal is injected from a plurality of sources that simultaneously emit orthogonal complementary sequences.

According to the invention, the injected signal comprises a pair of orthogonal complementary sequences, with each sequence being injected simultaneously by all of the sources.

In one embodiment of the invention, the signals are injected from a plurality of sources, each situated inside a distinct well, these signals being detected by a receiver or a set of receivers situated inside a well.

The injected energy signal is then preferably a seismic signal.

In another embodiment, the signals are injected from a plurality of sources situated in the same well and detected by a set of receivers situated in the same well to perform logging.

The injected energy signal is then preferably an acoustic signal.

The invention will be better understood from the following description given by way of non-limiting example and made with reference to the accompanying drawings, in which:

Figure 1a is a diagram representing a model of the subsurface response to a pulse being sent;

Figures 1b and 1c show a pulse as emitted and the response to said pulse;

Figure 2 is a block diagram applicable to the method of the invention;

Figures 3a and 3b show one example of two complementary sequences;

Figures 4a and 4b show the reference signals corresponding, in accordance with the invention, to the sequences of Figures 3a and 3b;

Figures 5a and 5b show the signals obtained after processing the signals of Figures 3a and 3b;

Figure 6 represents the response signal obtained after final processing; and

Figure 7 shows a second example comprising two pairs of complementary sequences and the corresponding reference signals.

According to the invention, encoded energy signal is injected into the subsurface.

The encoded signal is obtained from a source that emits energy p(t) that is applied to the input of a linear filter E(f).

It is thus the output signal x(t) from the filter that is injected into the subsurface and which is attenuated as it travels through various subsurface formations prior to being detected by reception means that may be constituted by one or more receivers.

The detected signal s(t) corresponds to the subsurface response with the addition of noise, written n(t).

On reception, the processing includes the step of decoding the signal s(t) by means of a linear filter D(f) having a transfer function that is the inverse of the linear filter used for encoding.

The output signal y(t) from the decoder is processed and is considered as the subsurface response signal.

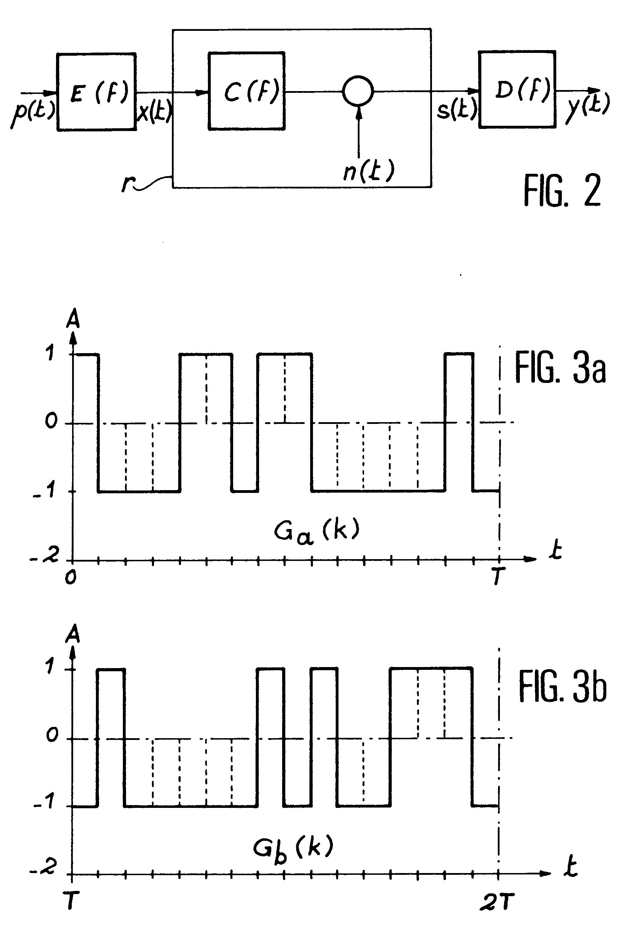

Figure 2 shows in diagrammatical form an apparatus for implementing the method. Box r indicates the subsurface response to the signal x(t).

The signal injected into the subsurface is an energy signal in the form of a plurality of pseudo-random pulse sequences. These sequences are of the complementary type.

Complementary sequences are encoded pulse sequences having specific properties, in particular orthogonality. Reference may be made to an article entitled "Complementary sets of sequences" by C. Tseng and C. Liu published in IEEE Transactions Information Theory, 18/5, 644-652, 1972.

Reference may also be made to the article published in IRE Transaction on Information Theory, 82-87, 1961, in which complementary sequences are defined, and in particular Golay sequences.

The method includes a step of detecting the signal which has been subjected to attenuation due to passing through various underground formations.

The method then comprises a step of correlating the detected signal with a reference signal.

The reference signal comprises a plurality of pseudo-random pulse sequences, having the same number of sequences as the emitted signal, with the sequences being selected so that the result of the correlation giving the subsurface response signal does not have secondary lobes.

It should also be specified that the injected signal p(t) may be of various different wave forms: sinewave archs or squarewave signals.

The present examples relate to squarewave signals, but signal p(t) injected into the subsurface may also be made up of sinewave archs, and other waveforms are also possible.

Two examples are described in greater detail below, in which the injected signal corresponds to a signal made up of pseudo-random sequences of the complementary sequence type.

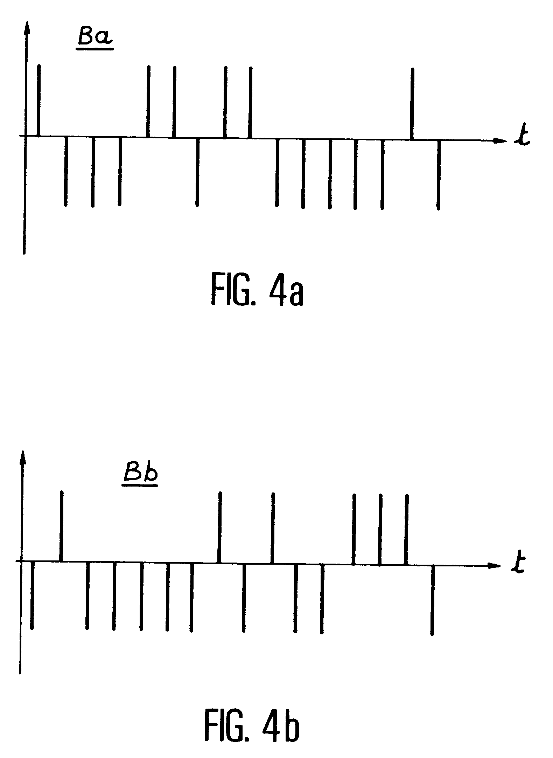

In the first example, shown in Figures 3a, 3b and 4a, 4b, two Golay sequences $G_a(k)$ and $G_b(k)$ are injected into the subsurface.

As can be seen in these figures, the two Golay sequences comprise positive amplitude pulses and negative amplitude pulses that meet the criteria laid down in the above-mentioned articles.

The detected signal y(t) is constituted by a first response to the first sequence $G_a(k)$ and a second response to the second sequence $G_b(k)$.

Correlation noted $RG_aB_a$ is then performed between the first detected signal $y_1(t)$ and a reference signal Ba which is a binary sequence corresponding to the first emitted sequence Ga(k). The sequence Ba is shown in Figure 4a. Thus:

$$RG_aB_a = y_1 \otimes B_a$$

Similarly, a correlation noted $RG_bB_b$ is performed between the second detected signal $y_2(t)$ and a reference sequence $B_b$ which is a binary sequence corresponding to the second emitted sequence $G_b(k)$. Sequence $B_b$ is shown in Figure 4b. Thus:

$$RG_bB_b = y_2 \otimes B_b$$

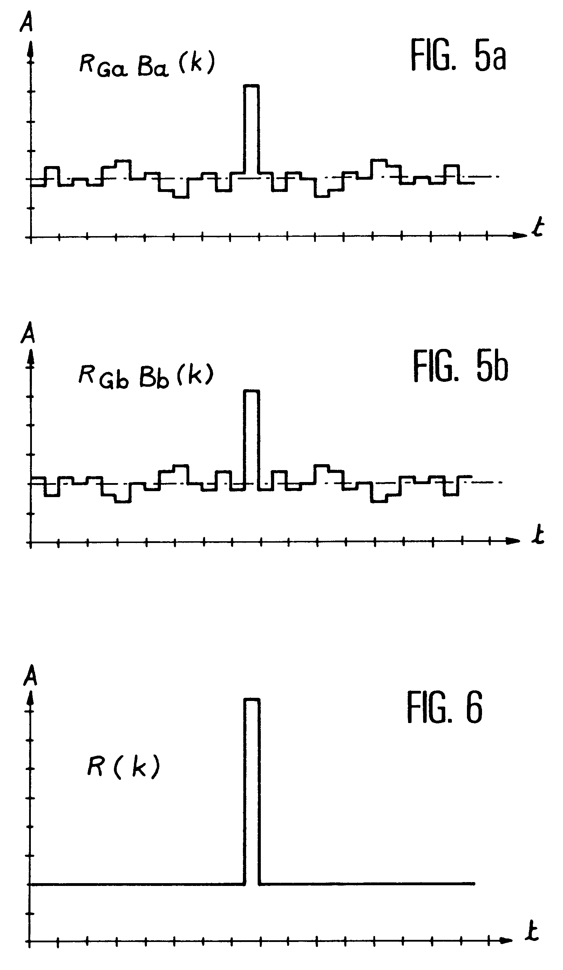

The result of the first correlation $RG_aB_a(k)$ is shown in Figure 5a. The result of correlation $RG_bB_b(k)$ is shown in Figure 5b.

These two correlations are then summed to obtain the response signal R(k) as shown in Figure 6, i.e.:

$$R = RG_aB_a + RG_bB_b$$

These correlations are performed in a time window and the result which can be seen in Figure 6 shows that there is an amplitude maximum in the center of the window with zeros everywhere else.

In another embodiment, the signal to be injected is such that it is made up of a plurality of orthogonal complementary sequence pairs, the signal is simultaneously injected from a plurality of sources, with the response of the subsurface to these sequences being received by a receiver.

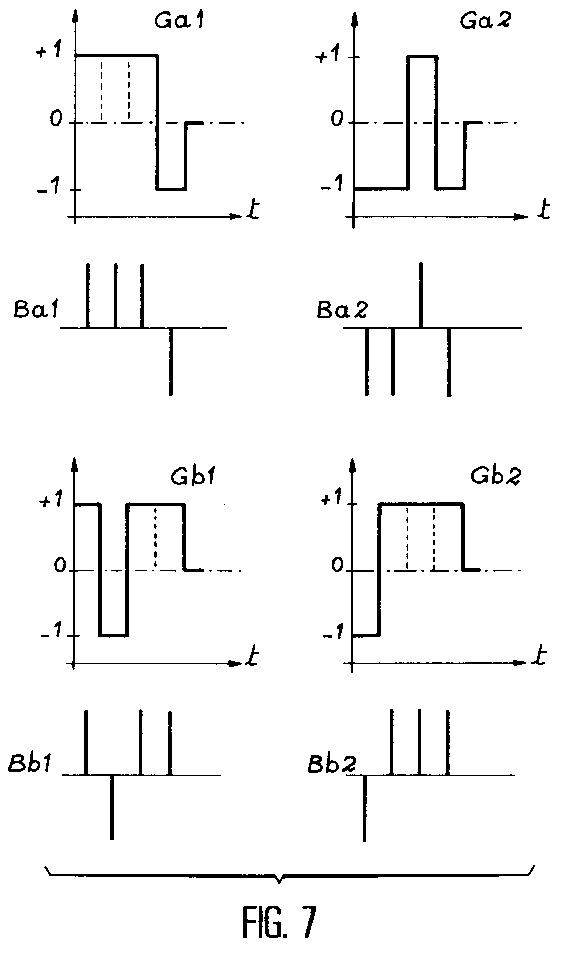

The example described below has two sources simultaneously emitting Golay sequences as shown in Figure 7.

A first source emits sequences $G_{a1}$ and $G_{b1}$, while a second source simultaneously emits sequences $G_{a2}$ and $G_{b2}$.

In this embodiment, sequences $G_{a1}$, $G_{a2}$, and then sequences $G_{b1}$, $G_{b2}$ are simultaneously injected. A receiver or a set of receivers detects the two subsurface response signals $R_a$, $R_b$ corresponding to the combination of the simultaneously-injected sequences:

$$R_a = y_{a1} + y_{a2}$$
$$R_b = y_{b1} + y_{b2}$$

Processing then comprises the steps of correlating the first receive signal $R_a$ with a reference sequence which is the sequence $B_{a1}$, then correlating the second receive signal $R_b$ with a reference sequence which is the sequence $B_{b1}$, and finally summing the two correlations to obtain a first response $r_1$ of the subsurface to the signal emitted from the first source $S_1$:

$$r_1(S_1) = R_a \otimes B_{a1} + R_b \otimes B_{b1}$$

The same procedure is applied to the other two sequences. Correlation is thus performed between the first receive signal $R_a$ and the sequence $B_{a2}$ and correlation is then performed between the second receive signal $R_b$ and the sequence $R_{b2}$. These two correlations are summed, thus providing a response signal $r_2$ corresponding to the signal injected by the second source $S_2$:

$$r_2(S_2) = R_a \otimes B_{a2} + R_b \otimes B_{b2}$$

Thus, the reference signal used in this case for performing the correlation operation for a given source is constituted by binary sequences corresponding to the sequences used by the source. The reference signals $B_{a1}$, $B_{b1}$ and $B_{a2}$, $B_{b2}$ are shown in Figure 7.

In addition, the complementary sequences selected for each of the sources are sequences having the property of being mutually orthogonal.

The properties of orthogonality can be summed up as follows:

When a correlation is performed between the sequences emitted simultaneously by the various sources and when the set of correlations are added-together, the result obtained is zero throughout the time window in which the correlation is performed.

Thus, to return to the example given, when a correlation is performed between the sequences $B_{a1}$ and $B_{a2}$ and between the sequences $B_{b1}$ and $B_{b2}$, and when these two correlations are summed together, zero is obtained throughout.

Furthermore, the orthogonal complementary sequences may be emitted from sources disposed in distinct wells, with the response signals to emission from each of these sources being received by a receiver or a set of receivers placed in another well.

Returning to the example given above and applying such a feature, one source is disposed in a first well and is used, for example, to inject the sequences $G_{a1}$ and $G_{b1}$, and a second source is disposed in a second well to inject the sequences $G_{a2}$ and $G_{b2}$.

A receiver or a set of receivers is then disposed in another well that is distinct from the first two wells.

The injected signals are preferably obtained from seismic sources (with frequencies generally being less than 1 kHz).

This constitutes an application of the method to cross-well seismic surveying.

According to another aspect, the orthogonal complementary sequences may be injected from sources disposed in the same well. The receiver(s) is/are then disposed in that well. The procedure is applicable to logging.

As one example of an application, mention may be made of acoustic velocity logging and more particularly of tools including a plurality of sources of different kinds, e.g. one monopole and two mutually perpendicular horizontal dipoles. The monopole source enables compressional velocity to be determined, and the dipole sources enable determination of shear velocities in two different directions.

The acquisition time for a measurement is limited by the speed of displacement of the logging tool. Consequently, by using complementary sequences to excite a source, it is possible to improve the signal-to-noise ratio by increasing the total energy emitted in a given length of time. By simultaneously exciting a plurality of sources (monopole and dipole) using orthogonal complementary sequences, it is possible further to increase the energy emitted by each of these sources and to increase the quality of the measurement. In addition, by exciting the sources simultaneously, it is possible to perform various different measurements (compressional velocity and shear velocity) at exactly the same instant, and consequently while facing the same formation.

The signals injected in this second application are preferably signals obtained from acoustic sources (having frequencies generally of the order of 5 kHz).

## Claims

1. A geophysical prospecting method, comprising the steps of:

injecting an energy signal in the form of at least two pseudo-random pulse sequences of the complementary sequence type into the subsurface;

detecting the energy signal after it has been attenuated by traveling through underground formations; and

correlating the detected signals and a reference signal comprising at least two pseudo-random binary sequences, and summing the correlations so that the resultant signal which corresponds to the subsurface response signal does not have secondary lobes.

2. A geophysical prospecting method according to claim 1, wherein the injected signal comprises an even number of complementary sequences, the reference signal comprising the same number of pseudo-random sequences so that the response signal obtained in a given time window by summing the correlations has a maximum in the center of the window and zeros throughout the remainder of the window.

3. A geophysical prospecting method according to claim 2, wherein the injected signal comprises two sequences, the sequences in this pair being Golay sequences, and the reference signal comprises two binary sequences corresponding to the Golay sequences.

4. A geophysical prospecting method according to claim 2, comprising the step of injecting orthogonal complementary sequences from a plurality of sources that emit simultaneously.

5. A geophysical prospecting method according to claim 2, comprising the step of injecting at least one pair of complementary sequences per source, with all of the sources injecting their respective sequences simultaneously.

6. A geophysical prospecting method according to claim 2, comprising the step of injecting said complementary sequences from sources disposed in distinct wells.

7. A geophysical prospecting method according to claim 2, comprising the step of injecting said complementary sequences from sources disposed in the same well.

8. A geophysical prospecting method according to any one of claims 1 to 6, wherein the energy signal is a seismic signal.

9. A geophysical prospecting method according to any one of claims 1 to 5 and 7, wherein the energy signal is an acoustic signal.

## Patentansprüche

1. Ein geophysikalisches Prospektionsverfahren, umfassend die Schritte:

   Untertägiges Einspeisen eines Energiesignals in Form von mindestens zwei pseudozufälligen Impulssequenzen des komplementären Sequenztyps;

   Erfassen des Energiesignals, nachdem es infolge Durchlaufen der untertägigen Formationen gedämpft worden ist; und

   Korrelieren der erfaßten Signale und eines Referenzsignals, das mindestens zwei pseudo-zufällige binäre Sequenzen umfaßt, und Summieren der Korrelationen derart, daß das resultierende Signal, das dem untertägigen Reaktionssignal entspricht, keine Sekundäräste besitzt.

2. Ein geophysikalisches Prospektionsverfahren nach Anspruch 1, bei dem das eingespeiste Signal eine gerade Anzahl von komplementären Sequenzen umfaßt, das Referenzsignal die gleiche Anzahl von pseudo-zufälligen Sequenzen umfaßt, so daß das in einem gegebenen Zeitfenster durch Summieren der Korrelationen erhaltene Reaktionssignal ein Maximum im Zentrum des Fensters aufweist und Nullen über den Rest des Fensters.

3. Ein geophysikalisches Prospektionsverfahren nach Anspruch 2, bei dem das eingespeiste Signal zwei Sequenzen umfaßt, wobei die Sequenzen in diesem Paar Golay-Sequenzen sind, und das Referenzsignal zwei binäre Sequenzen entsprechend den Golay-Sequenzen umfaßt.

4. Ein geophysikalisches Prospektionsverfahren nach Anspruch 2, umfassend den Schritt des Einspeisens orthogonaler komplementärer Sequenzen von einer Mehrzahl von Quellen, die gleichzeitig emittieren.

5. Ein geophysikalisches Prospektionsverfahren nach Anspruch 2, umfassend den Schritt des Einspeisens von mindestens einem Paar von komplementären Sequenzen pro Quelle, wobei alle Quellen ihre entsprechenden Sequenzen gleichzeitig einspeisen.

6. Ein geophysikalisches Prospektionsverfahren nach Anspruch 2, umfassend den Schritt des Einspeisens der komplementären Sequenzen von Quellen, die in unterschiedlichen Bohrlöchern angeordnet sind.

7. Ein geophysikalisches Prospektionsverfahren nach Anspruch 2, umfassend den Schritt des Einspeisens der komplementären Sequenzen von Quellen, die in demselben Bohrloch angeordnet sind.

8. Ein geophysikalisches Prospektionsverfahren nach einem der Ansprüche 1 bis 6, bei dem das Energiesignal ein seismisches Signal ist.

9. Ein geophysikalisches Prospektionsverfahren nach einem der Ansprüche 1 bis 5 und 7, bei dem das Energiesignal ein akustisches Signal ist.

## Revendications

1. Procédé d'exploration géophysique, comprenant les étapes consistant à :

   injecter un signal énergétique sous la forme d'au moins deux séquences d'impulsions pseudo-aléatoires du type à séquence complémentaire dans la subsurface ;

   détecter le signal énergétique après qu'il a été atténué par une propagation à travers les formations géologiques ; et

   corréler les signaux détectés et un signal de référence comprenant au moins deux séquences binaires pseudo-alétoires et sommer les corrélations de sorte que le signal résultant qui correspond au signal de réponse de la subsurface ne possède pas de lobe secondaire .

2. Procédé d'exploration géophysique selon la revendication 1, dans lequel le signal injecté comprend un nombre pair de séquences complémentaires , le signal de référence comprenant le même nombre de séquences pseudo-aléatoires de sorte que le signal de réponse obtenu dans une fenêtre de temps donnée en sommant les corrélations présente un maximum au centre de la fenêtre et des valeurs nulles tout au long du reste de la fenêtre.

3. Procédé d'exploration géophysique selon la revendication 2, dans lequel le signal injecté comprend deux séquences, les séquences de cette paire étant des séquences de Golay et le signal de référence comprend deux séquences binaires correspondant aux séquences de Golay.

4. Procédé d'exploration géophysique selon la revendication 2, comprenant l' étape consistant à injecter des séquences complémentaires orthogonales à partir d'une pluralité de sources qui émettent simultanément.

5. Procédé d'exploration géophysique selon la revendication 2, comprenant l'étape consistant à injecter au moins une paire de séquences complémentaires par source, toutes les sources injectant leurs séquences respectives simultanément.

6. Procédé d'exploration géophysique selon la revendication 2, comprenant l'étape consistant à injecter lesdites séquences complémentaires à partir de sources disposées dans des puits distincts.

7. Procédé d'exploration géophysique selon la revendication 2, comprenant l'étape consistant à injecter lesdites séquences complémentaires à partir de sources disposées dans le même puits.

8. Procédé d'exploration géophysique selon l'une quelconque des revendications 1 à 6, dans lequel le signal énergétique est un signal sismique.

9. Procédé d'exploration géophysique selon l'une quelconque des revendications 1 à 5 et 7, dans lequel le signal énergétique est un signal acoustique.

FIG. 1a

FIG. 1b

FIG. 1c

FIG. 2

FIG. 3a

$G_a(k)$

FIG. 3b

$G_b(k)$

FIG. 4a

FIG. 4b

$R_{Ga\,Ba}(k)$

FIG. 5a

$R_{Gb\,Bb}(k)$

FIG. 5b

$R(k)$

FIG. 6

FIG. 7